# EUROPEAN PATENT APPLICATION

(11) **EP 4 032 410 A1**
(43) Date of publication of application: **27.07.2022**
(21) Application number: 19946231.8
(22) Date of filing: 19.09.2019
(51) Int. Cl.: A23L 17/60, A23P 20/20, A23L 3/36, A23L 5/10, A23P 30/10, A23D 9/007

(54) **EDIBLE SHEET CONTAINING SEAWEED AND PREPARATION METHOD THEREFOR**

(71) Applicant: CJ Cheiljedang Corporation, Seoul 04560 (KR)
(72) Inventor: KIM, Tae Han, Seongnam-si, Gyeonggi-do 13165 (KR); KIM, Hoo Sik, Yongin-si, Gyeonggi-do 16929 (KR)
(74) Representative: Cabinet Laurent & Charras
(86) International application number: PCT/KR2019/012167
(87) International publication number: WO 2021/054498

(57) **Abstract**

The present disclosure relates to 1) an edible sheet, comprising: a bonded sheet, which comprises at least one grain sheet comprising grains and at least one seaweed sheet comprising seaweed; and a moisture barrier layer comprising a moisture barrier material which is formed on at least a portion of at least one surface selected from one surface of a bonding portion where the grain sheet and the seaweed sheet are bonded so as to form the bonded sheet, and one side of the bonded sheet, 2) a method for preparing an edible sheet, comprising: forming a bonded sheet by bonding at least one grain sheet comprising grains and at least one seaweed sheet comprising seaweed; and forming a moisture barrier layer, comprising a moisture barrier material on at least a portion of at least one surface selected from one surface of a bonding portion where the grain sheet and the seaweed sheet are bonded so as to form the bonded sheet, and one side of the bonded sheet, and 3) a method for preparing an edible sheet, comprising: preparing a bonded sheet, in which at least one grain sheet comprising grains and at least one seaweed sheet comprising seaweed are bonded; and forming a moisture barrier layer on at least a portion of one side of the bonded sheet.

## Description

### TECHNICAL FIELD

The present disclosure relates to an edible sheet which contains seaweed and a preparation method thereof.

### BACKGROUND ART

Seaweed is nutritionally rich in vitamins and inorganic minerals essential for health, and has been widely used as a food material since ancient times. Alginic acid, which is contained in large amounts in seaweed, is effective in relieving constipation by aiding the peristaltic movement of the large intestine, and calcium ions are effective in preventing osteoporosis or osteomalacia, and an iodine component is effective in promoting appetite and preventing thyroid edema.

Conventionally, seaweed, which is a raw food material for seasoning or stewing, has been consumed by itself or in a dried state in the form of a thin sheet of a certain size when long-term distribution or storage is required. In particular, there is a demand to realize and maintain the savory taste and crispy texture of commercially dried seaweed.

The laver used in a processed product using seaweed (*e*.*g*., gimbap and triangular gimbap) has a problem in that the longer it is stored at room temperature as well as in a refrigerated or frozen state, the more moisture from the outside or contained in the contents (food) is introduced thereinto, thus making it impossible to maintain a crispy texture.

Therefore, in the case of processed products containing seaweed, there is a need to prevent transfer of moisture to seaweed during the period of distribution or storage in a frozen state, in addition to realization of physical properties for a suitable purpose.

### DISCLOSURE OF THE INVENTION

### TECHNICAL PROBLEM

An aspect of the present application provides an edible sheet, in which the shelf life is extended by maintaining a crispy texture and storage stability is improved, by preventing moisture from entering the edible sheet along with improving the physical properties of the edible sheet as a processed product of seaweed including a seaweed sheet; and a method for preparing the edible sheet.

In addition, the present disclosure provides an edible sheet that can also be used as an edible packaging material for packaging other foods due to its excellent formability; and a method for preparing the edible sheet.

In addition, the present disclosure provides an edible sheet, which has excellent formability and retains its shape even after packaging (in particular in the case of a frozen edible sheet, it undergoes little change in physical properties even after thawing at room temperature and pressure (STP) conditions or cooking in a microwave oven) and thus can maintain an excellent texture, thereby having excellent sensory and taste qualities; and a method for preparing the edible sheet.

### TECHNICAL SOLUTION

For these purposes, an aspect of the present application provides an edible sheet, comprising: a bonded sheet, which comprises at least one grain sheet comprising grains and at least one seaweed sheet comprising seaweed; and a moisture barrier layer comprising a moisture barrier material, which is formed on at least a portion of at least one surface selected from one surface of a bonding portion where the grain sheet and the seaweed sheet are bonded so as to form the bonded sheet, and one side of the bonded sheet.

In addition, another aspect of the present application provides a method for preparing an edible sheet, comprising: forming a bonded sheet by bonding at least one grain sheet comprising grains and at least one seaweed sheet comprising seaweed; and forming a moisture barrier layer comprising a moisture barrier material on at least a portion of at least one surface selected from one surface of a bonding portion where the grain sheet and the seaweed sheet are bonded so as to form the bonded sheet, and one side of the bonded sheet.

In addition, still another aspect of the present application provides a method for preparing an edible sheet, comprising: preparing a bonded sheet, in which at least one grain sheet comprising grains and at least one seaweed sheet comprising seaweed are bonded; and forming a moisture barrier layer on at least a portion of one side of the bonded sheet.

### ADVANTAGEOUS EFFECTS

The edible sheet according to the present disclosure has the effect of preventing the introduction of moisture from food inside an edible sheet or from outside an edible sheet by comprising a moisture barrier layer comprising a moisture barrier material formed on at least a portion of at least one surface selected from one surface of a bonding portion of the bonded sheet which comprises at least one grain sheet comprising grains and at least one seaweed sheet comprising seaweed, and one side of the bonded sheet. Accordingly, the edible sheet has the effects of improving the texture and increasing the storage stability of the edible sheet, thereby extending the shelf life of the edible sheet.

Further, the edible sheet according to the present disclosure has a property that it has excellent formability to be used as an edible packaging material (a packaging material or packaging container) for packaging other foods other than the edible sheet.

In addition, the edible sheet according to the present disclosure has excellent preservation of its shape even during distribution after forming (packaging) of the edible sheet, and in particular in the case of a frozen edible sheet, it can minimize the change in physical properties even after thawing at standard temperature and pressure (STP) conditions or cooking in a microwave oven, thereby having an excellent sensory effect when eating.

### BRIEF DESCRIPTION OF THE DRAWINGS

FIG. 1 is a drawing showing the structure of an edible sheet according to an aspect of the present disclosure.
FIG. 2 is a drawing showing the structure of an edible sheet according to another aspect of the present disclosure.
FIG. 3 is a drawing showing the structure of an edible sheet according to still another aspect of the present disclosure.
FIG. 4 is a drawing showing the evaluation result of texture analysis of the edible sheet according to Example 4-1.
FIG. 5 is a drawing showing the evaluation result of texture analysis of the edible sheet according to Example 4-2.
FIG. 6 is a drawing showing the evaluation result of texture analysis of the edible sheet according to Example 4-3.
FIG. 7 is a drawing showing the evaluation result of texture analysis of the edible sheet according to Example 4-4.

### [Code Explanation]

11: grain sheet
12: seaweed sheet
21, 22, 23: moisture barrier layer
31, 32: bonding portion

### MODE FOR CARRYING OUT THE INVENTION

Hereinafter, the present application will be described in more detail.

An aspect of the present application provides an edible sheet, comprising: a bonded sheet, which comprises at least one grain sheet comprising grains and at least one seaweed sheet comprising seaweed; and a moisture barrier layer comprising a moisture barrier material, which is formed, on at least a portion of at least one surface selected from one surface of a bonding portion where the grain sheet and the seaweed sheet are bonded so as to form the bonded sheet, and one side of the bonded sheet.

The edible sheet as described above can extend the short quality maintenance period, which is a disadvantage of conventional seaweed products, and improve and maintain the crispy texture.

The grain sheet refers to a layer having the form of a thin sheet of any shape, and the grain sheet may be formed on the seaweed sheet, and more specifically, may be continuously formed on the seaweed sheet, and alternatively, a plurality of grain sheets may be formed discontinuously, and more specifically, a plurality of grain sheets partially connected to the seaweed sheet may be formed discontinuously.

In addition, when the grain sheet is formed in multiple layers, another grain sheet may be continuously formed on the grain sheet as well as on the seaweed sheet, or multiple grain sheets partially connected to the grain sheet may be formed discontinuously.

For example, the grain sheet may be a sheet-shaped rice paper or net-shaped rice paper (*e*.*g*., Cha Zio skin such as Netskin), or a discontinuously formed rice crunch, rice starch injection solution, etc. may be used in various ways.

The grain may include at least one grain selected from the group consisting of rice, barley, soybean, foxtail millet, millet, sorghum, wheat, and corn.

The grain sheet may be prepared using grain and/or starch, *etc.* and water. The grain sheet may be prepared using only grain powder and water, or may be prepared by mixing the grain powder with starch powder and water so as to improve the formability by supplementing the viscosity. In particular, the grain may include rice, and the rice may be white rice, brown rice, red rice, green rice, black rice and/or glutinous rice, and as the starch, at least one starch selected from the group consisting of potato starch, sweet potato starch, tapioca starch, corn starch, rice starch, and wheat starch may be used. In addition, various kinds of seasonings may be further added.

The grain sheet may be included, per 100 parts by weight of starch, in an amount of a range consisting of one lower limit selected from 1 part by weight, 5 parts by weight, 10 parts by weight, 20 parts by weight, 30 parts by weight, 40 parts by weight, and 50 parts by weight of grain and/or one upper limit selected from 100 parts by weight , 90 parts by weight, 80 parts by weight, 70 parts by weight, 60 parts by weight, and 50 parts by weight, for example, may be included in an amount of 1 to 100 parts by weight, 5 to 90, 10 to 80 parts by weight, 10 to 60 parts by weight, 20 to 80 parts by weight, 20 to 60 parts by weight, or 40 to 60 parts by weight.

The grain sheet may be prepared directly from the grains and used, or commercially available ones such as rice paper may be used.

In addition, the rice paper, which is also referred to as Hamjissam, Nem, Banh Trang, or Baincha, is basically prepared including rice flour and water, and the content of rice may vary depending on the country of origin. In addition, a pattern may be formed on the surface using a bamboo board, etc. during the drying process.

In addition, rice crunch is a puffed raw material of small ball (average diameter: about 0.5 mm) type prepared by processing rice as a main raw material, and may be prepared by baking brown rice, sorghum, and adlay, *etc.* in addition to rice. When a rice crunch layer is included in the seaweed sheet, the texture of the edible sheet can be improved.

The rice starch spray solution is a spray solution prepared by dispersing raw materials such as rice powder, glutinous rice powder, or starch in water, and is gelatinized during baking after spraying on the seaweed sheet, and can improve the texture of the edible sheet.

Rice netskin is a net-shaped sheet used as a skin for Cha Zio, a Vietnamese cuisine, and when the rice netskin as described above is used as a grain sheet, the texture can be further improved.

The thickness of the grain sheet may be in a range consisting of one lower limit selected from 0.1 mm, 0.2 mm, 0.3 mm, and 0.4 mm and/or one upper limit selected from 0.6 mm, 0.5 mm, and 0.4 mm, for example, it may be in a range of 0.1 mm to 0.6 mm, 0.2 mm 0.5 mm, specifically 0.2 mm to 0.4 mm, and more specifically 0.3 mm to 0.4 mm. When the thickness of the grain sheet satisfies the above range, the formability of the edible sheet is improved, no cracking occurs even during long-term distribution/storage, and the texture during eating is also excellent.

The grain sheet may have physical properties for reinforcing the seaweed sheet which is relatively fragile. For example, the grain sheet may have higher rigidity and elasticity than seaweed sheets. For example, the grain sheet may have low rigidity in a state of high moisture content, making it easy to be formed into a cone shape, and when baked under a certain condition in that state, the rigidity is improved thus having a sufficient rigidity to maintain the cone shape without a separate support. For example, when baked under the conditions of 150°C to 200°C for 5 to 10 minutes, the grain sheet can provide a hardness of 200 gf or higher, 300 gf or higher, 400 gf or higher, more specifically in a range of 200 gf to 1500 gf, 300 gf to 1200 gf, or 400 to 1200 gf. Such hardness can provide a sufficient rigidity not to be broken when the edible sheet contains 50 g to 150 g of the contents even if a person eats the same while holding by hand.

The seaweed sheet is a thin sheet of an arbitrary shape, and the seaweed sheet may include at least one selected from the group consisting of chlorella, green laver, green sea fingers, laver, agar-agar, sea mustard, kelp, *Sargassum,* and hijiki.

The seaweed sheet comprising the seaweed may be a sheet-shaped dried seaweed sheet in which seaweed is dried. The dried seaweed sheet is one in which seaweed itself or a fragment thereof, or flake or powder of seaweed is dried in a form of a thin sheet of an arbitrary shape. The seaweed used as a raw material for the dried seaweed sheet may include green algae (*e*.*g*., chlorella, green laver, green sea fingers, and *Capsosiphon fulvescens, etc.*)*;* red algae (*e*.*g*., laver, agar-agar, *etc*.); brown algae (*e*.*g*., sea mustard, kelp, *Sargassum,* hijiki, *etc.*)*, etc.* may be used alone or as a mixture. As a representative example, laver may be dried alone or laver may be dried together with green laver, chlorella, sea mustard, etc. In order to further improve the flavor of the seaweed, various seasonings may be further added to the seaweed.

The grain sheet and the seaweed sheet may be bonded with a bonding solution, and in particular, the bonding solution may include water. In addition to water, the bonding solution may include viscous edible solutions (*e*.*g*., salt water, a sugar solution, starch, an egg white solution, a whole egg solution, grain glue, *etc.*) or a plurality of these; however, due to the characteristics of the grain sheet and the seaweed sheet, these sheets can easily be bonded merely using water.

The bonding solution may additionally include a flavoring agent in addition to the water. By adding the flavoring agent, a desired taste can be further added to the seaweed sheet. As the flavoring agent, any sitologically acceptable flavoring agent may be used, and it may be selected from a lemon concentrate, a ginger concentrate, a plum concentrate, green tea powder, a cinnamon syrup, a shrimp extract, a katsuobushi extract, a herbal extract, a bulgogi flavor seasoning, a lime flavor seasoning, etc.

The bonding solution may be included, based on 100 parts by weight of the grain sheet, in an amount of a range consisting of one lower limit selected from 2 parts by weight, 3 parts by weight, 5 parts by weight, 7 parts by weight, 9 parts by weight, 10 parts by weight, 15 parts by weight, and 20 parts by weight, and/or one upper limit selected from 50 parts by weight, 48 parts by weight, 45 parts by weight, 40 parts by weight, 35 parts by weight, and 30 parts by weight. For example, the bonding solution may be applied in an amount of 2 to 50 parts by weight, specifically 5 to 45 parts by weight, 5 to 40 parts by weight, 5 to 35 parts by weight, 10 to 45 parts by weight, 10 to 40 parts by weight, 10 to 35 parts by weight, 10 to 30 parts by weight, 10 to 25 parts by weight, 15 to 40 parts by weight, or 15 to 30 parts by weight. When the content of the bonding solution satisfies the above range, the bonding between the seaweed sheet and the grain sheet is excellent, and thus the seaweed sheet and the grain sheet are not separated even after long-term storage, and these sheets are puffed due to moisture during the baking process, thereby improving the texture of the finally prepared edible sheet.

The bonding portion in which the grain sheet and the seaweed sheet are bonded may further include a bonding layer. The bonding layer, which is a layer formed by a bonding solution, may be a mixture layer of grain and/or starch and water formed when water meets with grain and/or starch, a sugar solution layer, a starch water layer, an egg white solution layer, a whole egg solution layer, and a grain (glutinous rice) glue layer, and when only water is included as the bonding solution, the bonding layer may not be clearly distinguished.

The bonded sheet may refer to a sheet in a state in which the grain sheet and the seaweed sheet are bonded. In particular, the grain sheet may be at least one, and the seaweed sheet may be at least one. Specifically, when the grain sheet and the seaweed sheet are bonded, or in the provided bonded sheet, the grain sheet and the seaweed sheet may each be one or more. For example, a seaweed sheet, a grain sheet, and a seaweed sheet may be bonded in this order, and in particular, the grain sheet and the seaweed sheet may each be one or more. Alternatively, a grain sheet, a seaweed sheet, and a grain sheet may be bonded in this order, and in particular, the grain sheet and the seaweed sheet may each be one or more. The order of bonding and the number of bonding of the grain sheet and the seaweed sheet are not limited.

The seaweed sheet and/or the grain sheet may be cut or trimmed into various shapes as needed, such as a circle, a triangle, and a polygonal shape (*e*.*g*., a square). In particular, the seaweed sheet may be cut or trimmed such that at least one side thereof is larger than the grain sheet.

The moisture barrier layer comprising the moisture barrier material may be formed on at least a portion of at least one surface of the one surface of a bonding portion where the grain sheet and the seaweed sheet are bonded and/or the one side of the bonded sheet. That is, the moisture barrier layer comprising the moisture barrier material may be formed on at least a portion of at least one surface selected from one surface of a bonding portion where the grain sheet and the seaweed sheet are bonded; and one side of the bonded sheet.

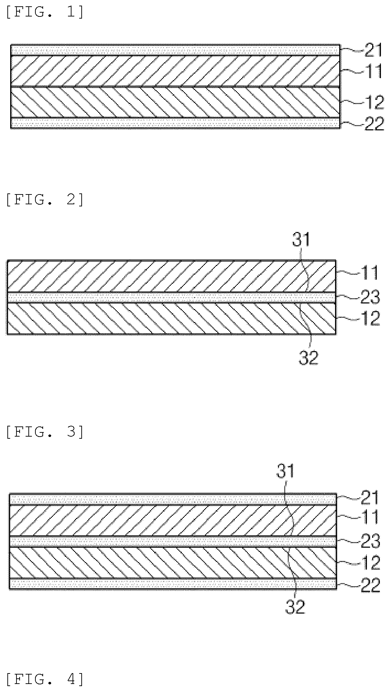

In an embodiment, as shown in FIG. 1, the moisture barrier layers 21 and 22 comprising the moisture barrier material may be formed on at least a portion of one side of the bonded sheet comprising the grain sheet 11 and the seaweed sheet 12. Meanwhile, although FIG. 1 shows the moisture barrier layers 21 and 22 formed on both sides of the bonded sheet, the moisture barrier layer may be formed only on at least a portion of at least one side of the bonded sheet. The one side refers to a surface or layer corresponding to the outermost layer of the bonded grain sheet 11 and seaweed sheet 12, and the at least a portion of the one side refers to one surface of one side of the grain sheet 11 or one surface of one side of the seaweed sheet 12. Specifically, the moisture barrier layer may be formed on at least one surface of the two surfaces of one side; or the moisture barrier layer may be formed on both of the two surfaces of one side for the effects of preventing moisture transfer and an excellent texture of the edible sheet.

In addition, in an embodiment, the moisture barrier layer 23 comprising the moisture barrier material may be formed on one surface of the bonding portions 31 and 32 in which the grain sheet 11 and the seaweed sheet 12 are bonded, as shown in FIG. 2. The bonding portions 31 and 32 refer to a surface between the grain sheet 11 and the seaweed sheet 12, that is, a surface on which the grain sheet 11 and the seaweed sheet 12 are bonded to each other, and they correspond to a surface of the bonding portions 31 and 32 if they are positioned between the grain sheet 11 and the seaweed sheet 12, even if an additional material is further included between the grain sheet 11 and the seaweed sheet 12.

In another embodiment, the moisture barrier layers 21, 22, and 23 comprising the moisture barrier material, as shown in FIG. 3, may be formed on one surface of the bonding portions 31 and 32 in which the grain sheet 11 and the seaweed sheet 12 are bonded, and additionally, may be formed on one side of the bonded sheet comprising the grain sheet 11 and the seaweed sheet 12.

The moisture barrier layer plays the role of preventing the transfer of moisture contained in the grain sheet and the seaweed sheet to the outside and/or the transfer of moisture from the outside (*e*.*g*., in the air) to the edible sheet, thereby preventing the loss of its crunchy texture even after thawing under standard temperature and pressure (STP) conditions or cooking in a microwave. In addition, when the edible sheet is used as a packaging material for packaging other foods (*e*.*g*., cooked rice, *etc.*), the moisture barrier layer also plays the role of preventing the transfer of moisture derived from the foods to the edible sheet during distribution and/or preservation (storage).

The moisture barrier layer may include at least one moisture barrier material selected from the group consisting of edible fats and oils, shellac, lecithin, carnauba wax, and gelatin.

The edible fats and oils is a term shown in the Korean food code that refers to fats and oils that can be eaten. Edible fats and oils to be included in the moisture barrier layer may be one which is solid, semi-solid, liquid or solid powder at room temperature, and may include for example, fats and oils which are in a solid state at room temperature (*e*.*g*., hydrogenated palm oil, hydrogenated palm kernel oil, shortening, hydrogenated soybean oil, e*tc.*); fats and oils which are in a semi-solid state at room temperature (*e*.*g*., palm oil, partially hydrogenated soybean oil, *etc*.); fats and oils which are in a liquid state at room temperature (*e*.*g*., palm olein oil, canola oil, olive oil, grape seed oil, brown rice oil, soybean oil, corn oil, *etc*.); or oil and fat powders thereof, and may include a plurality of these. The semi-solid means a state between a solid and a liquid, in which its ability to maintain a shape is similar to that of a solid and its ability of flow shares a certain property of a liquid, and it may be used as a meaning of pseudo-solid, semi-solid, semi-liquid, etc.

Among the edible oil and fat contained in the moisture barrier layer, when the oil and fat which is in a solid or semi-solid state at room temperature are used, if the edible sheet is thawed under the standard temperature and pressure (STP) conditions or cooked in a microwave oven, the oil and fat is absorbed into the grain sheet and/or the seaweed sheet, and thus, there is an advantage in that the oil and fat is less likely to flow to the outside or get on hands while eating. Furthermore, even when the edible sheet is frozen and stored for a long period of time, it also has an effect of blocking moisture by inhibiting the transfer of moisture to the inside/outside of the edible sheet.

Therefore, as the edible oil and fat, the one which is solid or semi-solid at room temperature can be used, and more specifically, in order to maintain a solid or semi-solid state at room temperature, the melting point of the edible oil and fat may be 30°C or higher, 31°C or higher, 32°C or higher, 33°C or higher, 34°C or higher, 35°C or higher, 36°C or higher, 37°C or higher, 38°C or higher, 39°C or higher, 40°C or higher, or may be contained in an amount of a range consisting of one lower limit selected from 30°C or higher, 31°C or higher, 32°C or higher, 33°C or higher, 34°C or higher, 35°C or higher, 36°C or higher, 37°C or higher, 38°C or higher, 39°C or higher, 40°C or higher and/or one upper limit selected from 70°C or less, 65°C or less, 60°C or less, 55°C or less, 50°C or less, 45°C or less. The melting point of the edible oil and fat is for the purpose of maintaining a solid or semi-solid shape at room temperature, and any edible oil and fat having a melting point for satisfying the purpose may be selected without limitation. For example, the edible oil and fat contained in the moisture barrier layer may include hydrogenated palm oil, hydrogenated palm kernel oil, shortening, hydrogenated soybean oil, a mixture thereof, *etc.*

Shellac contained in the moisture barrier layer is generally one of coating materials applied to block water/oil outside of products such as chocolate balls, and can be obtained from extracts (secretions) derived from scale insects (Laccifer or Lacca). The moisture barrier layer may include a shellac mixture obtained by mixing the shellac with the oil and fat of hydrogenated palm kernel oil. In particular, the shellac mixture may be obtained by dispersing the shellac in an amount of 0.01 wt% to 3 wt% based on the total weight of the mixture. As the shellac mixture is used as a moisture barrier layer included in the edible sheet, there is an effect of preventing moisture transfer to the inside/outside of the edible sheet.

Lecithin contained in the moisture barrier layer is a lipophilic emulsifier that collectively refers to a group of yellowish brown fatty materials which occur in animal and plant tissues consisting of phosphoric acid, choline, fatty acids, glycerol, glycolipids, triglycerides, and phospholipids. As lecithin, which has the property of being immiscible with water, is used in the moisture barrier layer, there is an effect of preventing moisture transfer to the inside/outside of the edible sheet.

The carnauba wax contained in the moisture barrier layer is a wax in a solid form (*e*.*g*., yellowish brown powder, flakes, *etc.*) obtained by purifying a kind of sap extracted from the leaves and/or shoots of the carnauba palm several times, and the moisture barrier layer may include a carnauba wax mixture obtained by mixing the powder of the carnauba wax with the oil and fat of hydrogenated palm kernel oil.

Gelatin contained in the moisture barrier layer is a kind of derived protein obtained by decomposing/purifying collagen, which is a natural protein constituting animal skins, tendons, cartilage, *etc.*, and is one of the processing raw materials generally used for sausage skin. The gelatin may include those in the form of a gelatin powder and a gelatin sheet, and preferably in the form of gelatin sheet form. Since the gelatin is known to absorb moisture, it has the effect of preventing moisture transfer to the inside/outside of the edible sheet if it is applied to the edible sheet.

In particular, the moisture barrier layer formed on the grain sheet and/or the seaweed sheet may have the same content of at least one moisture barrier material selected from the group consisting of edible oil and fat, shellac, lecithin, carnauba wax, and gelatin, or alternatively, may have a different content from each other, thereby forming a moisture barrier layer on the surface of each of the grain sheet and the seaweed sheet.

For example, the moisture barrier layer formed on at least a portion of the grain sheet may include at least one (moisture barrier material) selected from the group consisting of the edible oil and fat, shellac, lecithin, carnauba wax, and gelatin, in an amount of a range consisting of one lower limit selected from 1 part by weight, 1.5 parts by weight, 2 parts by weight, 2.5 parts by weight, 4 parts by weight, 6 parts by weight, 8 parts by weight, 10 parts by weight, 12 parts by weight, 14 parts by weight, and 16 parts by weight based on 100 parts by weight of the grain sheet; and/or one upper limit selected from 40 parts by weight, 38 parts by weight, 36 parts by weight, 34 parts by weight, 32 parts by weight, 30 parts by weight, 25 parts by weight, 20 parts by weight, and 15 parts by weight, based on 100 parts by weight of the grain sheet; for example, may include 1 to 40 parts by weight, 1 to 38 parts by weight, 1.5 to 36 parts by weight, 2 to 34 parts by weight, 2.5 to 30 parts by weight, 2.5 to 25 parts by weight, 4 to 20 parts by weight, 8 to 20 parts by weight, 10 to 40 parts by weight, 10 to 30 parts by weight, 12 to 25 parts by weight, or 16 to 20 parts by weight. The moisture barrier layer formed on at least a portion of the seaweed sheet may include at least one (moisture barrier material) selected from the group consisting of the edible oil and fat, shellac, lecithin, carnauba wax, and gelatin, in an amount of a range consisting of one lower limit selected from 1 part by weight, 1.5 parts by weight, 2 parts by weight, 2.5 parts by weight, 5 parts by weight, 7.5 parts by weight, 10 parts by weight, 12.5 parts by weight, 15 parts by weight, 20 parts by weight, and 25 parts by weight based on 100 parts by weight of the seaweed sheet; and/or one upper limit selected from 75 parts by weight, 70 parts by weight, 65 parts by weight, 60 parts by weight, 55 parts by weight, 50 parts by weight, 45 parts by weight, 40 parts by weight, 35 parts by weight, 30 parts by weight, 25 parts by weight, and 20 parts by weight, based on 100 parts by weight of the seaweed sheet; for example, may include 1 to 75 parts by weight, 1 to 50 parts by weight, 1 to 45 parts by weight, 2 to 40 parts by weight, 2.5 to 40 parts by weight, 5 to 50 parts by weight, 7.5 to 45 parts by weight, 12.5 to 45 parts by weight, 20 to 40 parts by weight, 25 to 40 parts by weight, 1 to 40 parts by weight, 2.5 to 30 parts by weight, 5 to 25 parts by weight, 7.5 to 20 parts by weight, or 10 to 20 parts by weight.

When the content of at least one (moisture barrier material) selected from the group consisting of the edible oil and fat, shellac, lecithin, carnauba wax, and gelatin to be applied to the grain sheet and/or the seaweed sheet satisfies the above range, the moisture contained in the grain sheet and the seaweed sheet can be prevented from being transferred to the outside, and the intrusion of moisture derived from the outside can be inhibited, thereby capable of maintaining a crispy texture while eating.

Meanwhile, the moisture barrier layer may further include oil and fat powder, an emulsifier, *etc.*

In addition, the moisture barrier layer may further include an antioxidant to increase the storage stability of the edible sheet. As the antioxidant, any antioxidant known in the art to inhibit the oxidation of edible oil and fat, shellac, lecithin, carnauba wax and/or gelatin may be used, for example, a herbal extract, a grapefruit extract, a tea extract, tocopherol, tea catechin, etc. may be used.

The edible sheet according to the present application may mean edible food.

The edible sheet may be consumed alone, and may be consumed along with food other than the edible sheet and the edible sheet. In particular, the food other than the edible sheet may be rice, fried rice, mixed rice, *etc.* When there is a subject to be consumed together in addition to the edible sheet, the food may be accommodated in an inner space formed by forming the edible sheet into a certain shape, and the edible sheet and the food may be consumed together.

The edible sheet may be a circular or polygonal planar sheet shape such as a triangle or a square, or may be formed by forming a planar sheet into a three-dimensional shape.

For example, the edible sheet may be three-dimensionally rolled into a cone shape and formed into a cone-shaped structure. The cone shape means a three-dimensional shape in which a cross-sectional area gradually decreases or increases in one direction. The cross-sectional shape of the cone is not limited, and may have various cross-sectional shapes such as a circle, an oval shape, a triangle, a square, and other polygons, but is not limited thereto. For example, a cone shape having a circular cross section may be similar to that of an ice cream cone. For example, a cone shape with an oval cross section may be similar to the shape of a burrito or wrap. For example, a cone shape having a square cross section may be similar to a pyramid shape.

When the edible sheet is formed into a cone-shaped structure, the seaweed sheet may surround the grain sheet. In particular, the outer surface of the rolled seaweed sheet portion, the inner surface of the grain sheet portion covering the rolled seaweed sheet portion, and the inner surface of the seaweed sheet may be bonded using a bonding solution having the same component as the bonding solution. When the edible sheet has a round cone shape, the inner space of the edible sheet may also be formed in a round cone shape. In the inner space, foods, etc. that can be consumed together may be provided in addition to the edible sheet.

Even if the edible sheet according to the present application is formed in a three-dimensional shape, it may be formed to the extent to be suitable for formation into a three-dimensional shape, maintenance, and texture after formation.

The bonded grain sheet and seaweed sheet may be baked prior to forming the oil layer. In addition, when the grain sheet and the seaweed sheet bonded as described above are molded into various shapes as necessary, they may be baked after being formed.

The edible sheet may be distributed in a frozen state. The edible sheet is distributed and/or stored as a frozen edible sheet. To be consumed, it may be thawed under the standard temperature and pressure (STP) conditions or may be consumed after thawing using a microwave oven, *etc.*

The edible sheet prepared as described above has a hardness measured using TA-XT Plus (Stable Micro Systems) (Texture Technologies, UK) in a range consisting of one lower limit selected from 200 g, 250 g, 300 g, 350 g, 400 g, 450 g, and 500 g; and/or one upper limit selected from 1,200 g, 1,100 g, 1,000 g, 900 g, and 800 g. For example, the edible sheet may have a hardness in a range of 200 g to 1,200 g, 300 g to 900 g, 400 g to 1,000 g, or 500 g to 800 g. When the hardness of the edible sheet satisfies the above range, it is possible to maintain a crispy texture, thus having the effect of excellent sensory quality.

The edible sheet prepared as described above has an elasticity (sec) measured using TA-XT Plus (Stable Micro Systems)(Texture Technologies, UK) in a range consisting of one lower limit selected as 0.7 seconds and 0.8 seconds, and/or one upper limit selected as 2.0 seconds, 1.9 seconds, 1.8 seconds, and 1.7 seconds. For example, the edible sheet may have elasticity in a range of 0.7 seconds to 2.0 seconds, or 0.8 seconds to 1.9 seconds. When the elasticity of the edible sheet satisfies the above range, it is possible to maintain a crispy texture, thus having the effect of excellent sensory quality.

The hardness of the edible sheet measured using the TA-XT Plus may be under the conditions of Test Mode: Compression; Pre-Test Speed: 2.00 mm/sec; Test Speed: 1.00 mm/sec; Post-Test Speed: 10.00 mm/sec; Target Mode: Distance; Force: 100.0 g; Distance: 5.000 mm; Strain: 50.0 %; Trigger Type: Auto (Force); Trigger Force: 5.0 g; Probe: HDP/FSR; FILM, SUPPORT RIG; Batch: TEST/Points per second: 500.

In addition, the edible sheet may be included in a range consisting of one lower limit selected from 0.5 wt%, 0.6 wt%, 0.7 wt%, 0.8 wt%, 0.9 wt%, and 1 wt%; and/or one upper limit selected from less than 3.0 wt%, 2.9 wt%, 2.8 wt%, 2.7 wt%, 2.6 wt%, 2.5 wt%, and 2 wt%, per 1 g of the edible sheet 60 days immediately after freezing. For example, the edible sheet content may be in a range of 0.5 wt% or higher and less than 3.0 wt%, and 0.5 wt% to 2.5 wt%, and more preferably, 0.5 wt% to 2 wt%. When the moisture content per 1 g of the edible sheet 60 days immediately after freezing satisfies the above range, the edible sheet is not moist but has a crispy masticatory sensation, and stickiness during eating can be prevented, thereby minimizing foreign body sensation. The term "60 days immediately after freezing" means 60 days after conventional frozen distribution and/or storage, after the preparation date of the frozen food, conventional frozen distribution and/or storage.

After storing the edible sheet under standard temperature and pressure (STP) conditions for 48 hours, the rate of change in the moisture content of the edible sheet may be 0% to 50%, 0% to 30%, and more specifically 0% to 10%. When the edible sheet is stored for 48 hours under standard temperature and pressure (STP) conditions for 48 hours and the rate of change in the moisture content of the edible sheet satisfies the above range, the texture can be maintained even after the edible sheet is thawed, resulting in excellent taste quality. Although the change in the moisture content may change the moisture content due to an external change, in the case of an edible sheet as in the present disclosure, the change in moisture content due to external changes is minimized, and thus the taste quality can be excellent even after freezing and thawing.

In addition, another aspect of the present disclosure provides a method for preparing an edible sheet.

The method for preparing the edible sheet includes a step of forming a bonded sheet by bonding at least one grain sheet comprising grains and at least one seaweed sheet comprising seaweed; and a step of forming a moisture barrier layer comprisinga moisture barrier material on at least a portion of at least one surface selected from one surface of a bonding portion where the grain sheet and the seaweed sheet are bonded so as to form the bonded sheet, and one side of the bonded sheet. The order of the step of forming the moisture barrier layer and the bonding step of forming the bonded sheet may be changed according to the structure of the edible sheet, and more specifically, the step of forming the moisture barrier layer may be performed before the bonding step, after the bonding step, or before and after the bonding step.

In another aspect of the present disclosure, the method may include a step of providing a bonded sheet to which at least one grain sheet comprising grains and at least one seaweed sheet comprising seaweed are bonded to each other; and a step of forming a moisture barrier layer on at least a portion of one side of the bonded sheet. The step of providing the bonded sheet may include forming a bonded sheet by bonding at least one grain sheet and at least one seaweed sheet as described above, or by purchasing and using a commercially available bonded sheet.

First, the edible sheet may be formed as a bonded sheet by bonding at least one grain sheet comprising grains and at least one seaweed sheet comprising seaweed. The at least one grain sheet and the at least one seaweed sheet may be bonded using a bonding solution. In particular, the bonded sheet may be formed by alternately bonding one layer each of the seaweed sheet and the grain sheet to each other, or may be prepared by bonding at least one layer each of the seaweed sheet and the grain sheet to each other. The bonding solution may be applied to the grain sheet.

For example, the method for applying the bonding solution is not limited as long as it is a method for uniformly applying the bonding solution to the grain sheet, and for example, a spraying method may be used. The grain sheet and the seaweed sheet may be bonded by stacking the seaweed sheet on the grain sheet to which the bonding solution is applied. The seaweed sheet, grain sheet, and bonding solution are the same as described above.

More specifically, when the grain sheet is rice paper (including both sheet-type or net-type), the rice paper can be bonded to at least one surface of the seaweed sheet, and the rice paper and the seaweed sheet may be bonded by adding a bonding solution (*e*.*g*., a bonding solution including water) to the rice paper.

In addition, more specifically, when the grain sheet is a rice crunch layer, the rice crunch layer may be bonded to one side of the seaweed sheet, or between the seaweed sheet and another type of grain sheet (*e*.*g*., rice paper). In the case of bonding the rice crunch layer, it may be bonded using a bonding solution (*e*.*g*., a bonding solution comprising water), and more specifically, a water-containing sugar solution or a syrup.

In addition, more specifically, when the grain sheet is a rice starch spray solution, the rice starch spray solution may be bonded to one side of the seaweed sheet, or between the seaweed sheet and another kind of grain sheet (*e*.*g*., rice paper), and it is possible to form a bonded sheet by spraying the rice starch spray solution onto the seaweed sheet.

In particular, the seaweed sheet and/or the grain sheet may be cut or trimmed into a certain shape as necessary before being bonded. For example, the seaweed sheet and/or grain sheet may be cut or trimmed into a polygonal shape such as a circle, a triangle, and a square. In particular, the seaweed sheet may be cut or trimmed to have at least one side to be larger than that of the grain sheet. That is, after the seaweed sheet and/or grain sheet is cut or trimmed into a certain shape, a bonded sheet may be formed, and the moisture barrier layer may be formed thereafter; or a moisture barrier layer may be formed after the seaweed sheet and/or the grain sheet is cut or trimmed into a certain shape, and thereafter, a bonded sheet on which the moisture barrier layer is formed may be formed.

The moisture barrier layer may be formed on at least a portion of at least one of the grain sheet and the seaweed sheet. More specifically, the moisture barrier layer may be formed on at least a portion of at least one surface selected from one side of the bonding portion to which the at least one grain sheet and the at least one seaweed sheet are bonded, and one side of the bonded sheet. One side of the bonded sheet means a surface corresponding to the outermost layer of the bonded sheet, and the at least a portion of the side may specifically be one surface of one side of the grain sheet or one surface of one side of the seaweed sheet, and the moisture barrier layer may be formed on both of the two surfaces of one side for the effect of preventing moisture transfer and excellent texture of the edible sheet.

The bonding portion may mean a portion in which the grain sheet and the seaweed sheet are bonded (*i*.*e*., a surface or layer formed between the grain sheet and the seaweed sheet).

The moisture barrier layer may be formed by applying a moisture-barrier material comprising at least one, which is selected from the group consisting of edible fat and oil, shellac, lecithin, carnauba wax, and gelatin, on at least a portion of at least one surface of at least one of the grain sheet and seaweed sheet before the bonding step; or may be formed by applying at least one, which is selected from the group consisting of edible fat and oil, shellac, lecithin, carnauba wax, and gelatin, on at least a portion of one side of the bonded sheet after the bonding step. That is, the moisture barrier layer may be formed by applying a moisture-barrier material, which includes at least one selected from the group consisting of edible fat and oil, shellac, lecithin, carnauba wax, and gelatin, on at least a portion of at least one side selected from one surface and one side of the bonded sheet.

Forming a moisture barrier layer comprising a moisture barrier material on at least a portion of at least one selected from the one surface of the bonding portion and one side of the bonded sheet has the effect of preventing moisture transfer to the inside/outside of the edible sheet thereby providing an excellent texture.

In a case where the bonded sheet includes a plurality of grain sheets and/or a plurality of seaweed sheets, a moisture barrier layer may be formed on at least a portion of the surface of the outermost layer of the bonded sheet, or a moisture barrier layer may be formed on at least a portion of at least one surface among the one surfaces of the bonding portion of the bonded sheet.

The method of applying the moisture-barrier material, which includes at least one selected from the group consisting of edible oil and fat, shellac, lecithin, carnauba wax, and gelatin, on one side of the bonded sheet or at least one surface of the inner surfaces of the grain sheet and seaweed sheet before bonding may be in the form of an injection or spraying using a spray, or it may be applied using an application roller or brush pen, but the method is not limited thereto. In addition, the formation of the moisture barrier layer by applying a moisture barrier material, which includes at least one selected from the group consisting of edible oil and fat, shellac, lecithin, carnauba wax, and gelatin, onto the bonded sheet or the grain sheet and/or the seaweed sheet before bonding may be performed at room temperature and/or atmospheric pressure.

In particular, when the moisture-barrier material includes at least one selected from edible oil and fat, shellac, gelatin, carnauba wax, and lecithin, a moisture-barrier layer may be formed on at least a portion of the surfaces of the bonded sheet after the bonding step or the provided bonded sheet. For example, the method may include a bonding step, in which a bonded sheet is formed by bonding at least one grain sheet comprising grains and at least one seaweed sheet comprising seaweed; and a step of forming a moisture barrier layer, which includes at least one selected from edible fat, shellac, carnauba wax, and lecithin, on at least a portion of one side of the bonded sheet after the bonding step. Alternatively, the method may include a step of forming a moisture barrier layer, which includes at least one selected from edible fat, shellac, carnauba wax, and lecithin, on at least a portion of one side of the provided bonded sheet.

When the moisture barrier material includes gelatin, a moisture barrier layer may be formed on at least a portion of at least one surface of at least one sheet of the grain sheet and the seaweed sheet before the bonding step. For example, the method may include a bonding step, in which a bonded sheet is formed by bonding at least one grain sheet comprising grains and at least one seaweed sheet comprising seaweed; and a step of forming a moisture barrier layer comprising gelatin on at least a portion of at least one surface of at least one of the grain sheet and the seaweed sheet before the bonding step. That is, the moisture barrier layer comprising the gelatin may be formed on one surface of the bonding portion where the grain sheet and the seaweed sheet are bonded.

In addition, the method for preparing the edible sheet may further include molding a bonded sheet. For example, it may further include forming the bonded sheet into a predetermined shape.

The bonded sheet may be formed into a circular or polygonal planar sheet shape such as a triangle or a square, or may be formed by forming a planar sheet into a three-dimensional shape.

In particular, in the case of forming the edible sheet into a three-dimensional shape, the edible sheet may be formed into a certain shape by applying a certain pressure by hand, and the edible sheet may be formed using a mold of a certain shape prepared in advance. The mold may have various shapes (*e*.*g*., a mold of cone shape or a foldable mold of triangle shape), but any mold for forming the edible sheet may be used without limitation.

For example, when the edible sheet is formed into a three-dimensional shape, the edible sheet may be three-dimensionally rolled into a cone shape and thereby formed into a cone-shaped structure. In particular, the edible sheet may be rolled by applying a certain pressure by hand to form a cone-shaped structure, or may be formed using a cone-shaped mold prepared in advance.

The cone shape means a three-dimensional shape in which a cross-sectional area gradually decreases or increases in one direction. The cross-sectional shape of the cone is not limited, and may have various cross-sectional shapes (*e.g.*, a circle, an oval, a triangle, a square, other polygons, *etc*.), but is not limited thereto. When the edible sheet is formed into a cone-shaped structure, the seaweed sheet may surround the grain sheet. In particular, the outer surface of the rolled seaweed sheet portion, the inner surface of the grain sheet portion covering the rolled seaweed sheet portion, and the space between the inner surfaces of the seaweed sheet may be bonded using the bonding solution. The bonding solution used when bonding the seaweed sheet and the grain sheet may be applied in the same manner.

In addition, the method for preparing the edible sheet may further include a step of baking the bonded sheet. That is, the method may be that a bonded sheet is formed by bonding at least one grain sheet comprising grains and at least one seaweed sheet comprising seaweed, or the provided bonded sheet is formed into a predetermined shape, and then, the formed bonded sheet is baked.

Specifically, the baking step may be performed such that a moisture barrier layer is formed on at least a portion of at least one surface of at least one sheet of the grain sheet and the seaweed sheet before the bonding step, and the grain sheet and the seaweed sheet are bonded to form a bonded sheet, and thereafter the baking step is performed; or may be performed such that a moisture barrier layer is formed on at least a portion of one side of the bonded sheet after at least one grain sheet and at least one seaweed sheet are bonded to form a bonded sheet, or after baking the provided bonded sheet.

In particular, the bonded sheet may be baked in any way, but baking in an oven is suitable in terms of minimizing the defects of products. The bonded sheet may be baked using an oven, and specifically, may be baked after preheating in an oven. In particular, the upper and lower temperatures of the oven may be temperatures in a range consisting of one lower limit selected from 220°C, 225°C, 230°C, and 235°C and/or one upper limit selected from 250°C, 245°C, 240°C, and 235°C; for example, 220°C to 250°C, 220 to 245°C, 220°C to 240°C, 225°C to 240°C, and 230°C to 235°C. The bonded sheet may be preheated before baking in an oven, and the preheating time may be that consisting of one lower limit selected from 2 minutes, 3 minutes, 4 minutes, and 5 minutes and/or one upper limit selected from 10 minutes, 9 minutes, 8 minutes, 7 minutes, and 6 minutes; for example, it may be 2 to 10 minutes, 2 to 8 minutes, 3 to 7 minutes, 2 to 6 minutes, or 4 to 6 minutes. After the preheating in an oven, the baking time may be in a range consisting of one lower limit selected from 1 minute, 1 minute 30 seconds, 2 minutes, and 2 minutes 30 seconds and/or one upper limit selected from 5 minutes, 4 minutes 30 seconds, 4 minutes, 3 minutes 30 seconds, and 3 minutes; for example, 1 minute to 5 minutes, 1 minute to 4 minutes 30 seconds, 1 minute 30 seconds to 4 minutes, 1 minute 30 seconds to 3 minutes 30 seconds, 1 minute to 3 minutes, or 2 minutes to 3 minutes.

When the bonded sheet is baked under the above conditions, the texture becomes excellent and the sensory quality is excellent, whereas when the bonded sheet is baked outside the above conditions, problems may occur in that the texture becomes stronger and the masticatory power is increased, a foreign body sensation occurs due to adhesion to the teeth, etc.

The forming of the bonded sheet may be performed at room temperature, and when the bonded sheet is formed using a mold, the bonded sheet may be formed into a mold at the same time as the bonded sheet is baked. For example, when the bonded sheet is baked in an oven, it may be baked after safely placing the bonded sheet on a forming mold having a certain shape.

In addition, the method for preparing the edible sheet may further include freezing the edible sheet. The edible sheet may be a frozen edible sheet, and may be one which is distributed and/or stored in a frozen state. The freezing may be performed according to a conventional method known in the art to be capable of freezing grain sheets and seaweed sheets.

Hereinafter, the present disclosure will be described in detail by way of examples. However, the following examples do not specifically illustrate the present disclosure, and the contents of the present disclosure are not limited by the following examples.

### [Preparation Example]

### (1) Step for preparing laver and rice paper

1 g of purified water was applied onto about 4 g of 0.3 mm thick rice paper (Morn Vietnam Rice Paper), and sheet-shaped laver (Ssamsami - a product of Samhae Commercial Co., Ltd./laver of Bibigo Gimbap) was placed on top of it. Thereafter, the laver was cut into a certain size to prepare laver and rice paper.

### (2) Step for bonding laver and rice paper

1.2 g of water was sprayed on rice paper to bond the cut laver, and then formed using a cone-shaped mold or foldable triangle mold. Then, the resultant was baked for 2 minutes using a cone-shaped mold preheated in an oven at 235°C for 4 minutes at both upper and lower temperatures, and immediately separated from the cone mold at room temperature and placed to be cooled for 5 minutes to prepare a bonded sheet.

### (3) Step for forming moisture barrier layer

### - Oil layer

On the surface of the baked rice paper, hydrogenated palm kernel oil (Samyang Corporation, Lotte Food), palm oil (Samyang Corporation, Lotte Food), palm olein oil (Samyang Corporation, Lotte Food), canola oil (CheilJedang), corn oil (CheilJedang), or edible oil and food powder (Dyne Soze, main raw materials: palm oil/coconut oil) were sprayed in an amount of 0.3 g each. On the surface of the baked laver, the same oil that was previously sprayed on the rice paper, such as hydrogenated palm kernel oil (Samyang Corporation, Lotte Food), palm oil (Samyang Corporation, Lotte Food), palm olein oil (Samyang Corporation, Lotte Food), canola oil (CheilJedang), corn oil (CheilJedang), or edible oil and fat powder (Dyne Soze, main raw materials: palm oil/coconut oil) were sprayed and coated in an amount of 0.8 g each to prepare snacks.

### - Shellac layer

A snack was prepared by spraying a mixture, in which shellac was dispersed in an amount of 3 wt% in the oil and fat of hydrogenated palm kernel oil on the surfaces of the baked rice paper and the laver.

### - Wax layer

A snack was prepared by spraying and coating a mixture comprising carnauba wax powder in the oil and fat of hydrogenated palm kernel oil on the surface of the baked rice paper and the surface of the laver.

### - Gelatin layer

Before baking the rice paper and the laver sheet, a gelatin sheet (Nippi Corporation) was bonded by spraying water on the rice paper surface, laver surface, and between laver and rice paper.

### - Lecithin layer

A snack was prepared by coating the surfaces of baked rice paper and the laver with a lecithin (Solae Company) by a method of spraying or spreading.

### [Experimental Example 1] Evaluation of prevention of moisture transfer due to moisture barrier layer

The moisture content was measured for the snacks prepared in Preparation Example above with a difference in the moisture barrier layer as shown in Table 1 below on 1, 2, 3, 8, and 14 days immediately after freezing (18°C or below, frozen under atmospheric pressure), and the measurement results of the effect of preventing moisture transfer are shown in Table 1 below.

The moisture content was measured using an infrared moisture meter (Mettle Toledo Co., Ltd., a HB43 Halogen product, conditions: 100°C, time (auto)), and the increase or decrease rate of the moisture content means the increase or decrease rate of the moisture content on Day 1 of freezing compared to the moisture content on Day 14 of freezing.

**[Table 1]**

| Category | Day 1 of Freezing (wt%) | Day 2 of Freezing (wt%) | Day 3 of Freezing (wt%) | Day 8 of Freezing (wt%) | Day 14 of Freezing (wt%) (increase or decrease rate (%) of moisture content) |
|---|---|---|---|---|---|
| Comparativ e Example) Moisture Prevention Layer X | 1.3 | 2.5 | 2.3 | 2.1 | 2.3 (77%) |
| Example 1-1) Oil layer (Hydrogena ted Palm Kernel Oil) | 1.3 | 1.1 | 1.2 | 1.5 | 1.3 (0%) |
| Example 2) Shellac | 1.3 | 1.3 | 1.4 | 1.2 | 1.4 (8%) |
| Example 3) Carnauba wax | 1.3 | 1.4 | 1.4 | 1.3 | 1.4 (8%) |
| Example 4) Gelatin sheet | 1.3 | 1.2 | 1.3 | 1.3 | 1.5 (15%) |
| Example 5) Lecithin layer | 1.3 | 1.3 | 1.4 | 1.5 | 1.5 (15%) |

### [Experimental Example 2] Evaluation of prevention of moisture transfer according to moisture barrier layer (type of edible oil and fat)

The moisture content was measured for the snacks prepared in Preparation Example above with a difference in the moisture barrier layer as shown in Table 2 below on 1, 2, 3, 8, 14, and 60 days immediately after freezing (18°C or below, frozen under atmospheric pressure), and the measurement results of the effect of preventing moisture transfer are shown in Table 2 below.

The moisture content was measured using an infrared moisture meter (Mettle Toledo Co., Ltd., a HB43 Halogen product, conditions: 100°C, time (auto)), and the increase or decrease rate of the moisture content means the increase or decrease rate of the moisture content on Day 1 of freezing compared to the moisture content on Day 14 or Day 60 of freezing.

**[Table 2]**

| Category | Day 1 of Freezing (wt%) | Day 2 of Freezing (wt%) | Day 3 of Freezing (wt%) | Day 8 of Freezing (wt%) | Day 14 of Freezing (wt%) (increase or decrease rate (%) of moisture content) | Day 60 of Freezing (wt%) (increase or decrease rate (%) of moisture content) |
|---|---|---|---|---|---|---|
| Comparat ive Example) Moisture Preventi on Layer X | 1.3 | 2.5 | 2.3 | 2.1 | 2.3 (77%) | 3.0 (131%) |
| Example 1-1) (Hydroge nated Palm Kernel Oil) | 1.3 | 1.1 | 1.2 | 1.5 | 1.3 (0%) | 1.4 (8%) |
| Example 1-2) Palm Oil (Semi-Solid) | 1.3 | 1.6 | 1.4 | 1.2 | 1.3 (0%) | 1.4 (8%) |
| Example 1-3) Palm Olein Oil (Solutio n Or Semi-Solid) | 1.3 | 1.6 | 1.6 | 1.4 | 1.5 (15%) | 1.6 (23%) |
| Example 1-4) Canola Oil (Solutio n) | 1.3 | 1.5 | 1.3 | 1.4 | 1.6 (23%) | 1.7 (31%) |
| Example 1-5) Corn Oil (Solution) | 1.3 | 1.2 | 1.5 | 1.2 | 1.5 (15%) | 1.6 (23%) |
| Example 1-6) Edible Fat And Oil Powder | 1.3 | 1.3 | 1.2 | 1.6 | 1.8 (38%) | 2.5 (92%) |

According to Experimental Example 2 above, it was confirmed that the increase or decrease rate of the moisture content during long-term storage after freezing of the edible sheet comprising the moisture barrier layer was lower by about 100% or more compared to the snack without the moisture barrier layer. In addition, in the case of Examples 1-1 and 1-2, in which solid or semi-solid edible oils are used as a moisture barrier layer, it was confirmed that moisture is prevented from being transferred to the inside/outside of the edible sheet even during long-term storage after freezing thus having an extremely excellent effect of moisture prevention.

### [Experimental Example 3] Evaluation of prevention of moisture transfer according to location of moisture barrier layer

Moisture content of the snacks prepared with the moisture barrier layer of hydrogenated palm kernel oil used in Preparation Example above with a difference in its location, was measured on 1, 2, 3, 8, and 14 days immediately after freezing (18°C or below, frozen under atmospheric pressure), and the measurement results of the effect of preventing moisture transfer are shown in Table 3 below. The increase or decrease rate of the moisture content means the increase or decrease rate of the moisture content on Day 1 of freezing compared to the moisture content on Day 14 of freezing.

**[Table 3]**

| Category | Day 1 of Freezing (wt%) | Day 2 of Freezing (wt%) | Day 3 of Freezing (wt%) | Day 8 of Freezing (wt%) | Day 14 of Freezing (wt%) | Increase or decrease Rate (%) of Moisture Content after Day 14 of Freezing |
|---|---|---|---|---|---|---|
| Example 3-1) Formation of Moisture Barrier Layer (Hydrogenated Palm Kernel Oil) Only on Rice Paper | 1.2 | 1.6 | 1.6 | 1.5 | 1.5 | 25% |
| Example 3-2) Formation of Moisture Barrier Layer (Hydrogenated Palm Kernel Oil) Only on Laver | 1.2 | 1.4 | 1.7 | 1.8 | 2.0 | 67% |
| Example 3-3) Formation of Moisture Barrier Layer (Hydrogenated Palm Kernel Oil) on Both Rice Paper and Laver | 1.3 | 1.2 | 0.9 | 1.2 | 1.4 | 8% |

According to Experimental Example 3 above, in contrast to the cases of Examples 3-1 and 3-2, in which a moisture barrier layer was formed only on one of the outer side of the rice paper or the outer side of the laver of the snack prepared in Preparation Example above, the increase or decrease rate of moisture content 14 days immediately after freezing of the snack of Example 3-3, in which the moisture barrier layer was formed on both the outer surfaces of the rice paper and laver, was low by a maximum of 59%. Thus, an excellent effect of moisture prevention was confirmed when the moisture barrier layer was formed on both the outer surfaces of the rice paper and the laver.

### [Experimental Example 4] Evaluation of texture

In Preparation Example above, after baking the snack prepared with a difference in the process as shown in Table 4 below using a cone-shaped mold in an oven at an upper/lower temperature of 235°C, a physical property analyzer TA-XT Plus (Texture Technologies, Inc., UK) was used to confirm the hardness (g; the force required to reach the specified deformation, the maximum force of the first chewing), and was measured twice in total under the same conditions, and the results are shown in Table 4 below.

The physical property analyzer simulates the behavior of a person chewing twice in his mouth. The cylinder metal probe descends into the food sample in a vertical direction at a controlled speed from a controlled distance. The probe is then ascended again by a pre-adjusted distance and descended again for a second chewing. A force perception device and a transducer recognize the force applied to the measurement sample and send the data (a force value, an operation time, and a travel distance of the probe) to the computer. The conditions for measuring physical properties are as follows.

### <Measurement conditions for physical properties>

### Model Name: TA-XT Plus (Stable Micro Systems)

Test Mode: Compression;
Pre-Test Speed: 2.00 mm/sec;
Test Speed: 1.00 mm/sec;
Post-Test Speed: 10.00 mm/sec;
Target Mode: Distance;
Force: 100.0 g;
Distance: 5.000 mm;
Strain: 50.0 %;
Trigger Type: Auto (Force);
Trigger Force: 5.0 g;
Probe: HDP/FSR;
FILM, SUPPORT RIG;
Batch: TEST/Points per second: 500

**[Table 4]**

| Category | Average Force (Hardness) (g) | Time (Elasticity) (Seconds) |
|---|---|---|
| Example 4-1) Baking for 5 minutes without preheating | 629.485 | 0.5 |
| Example 4-2) Placing in cone-shaped mold preheated for 4 minutes and baking for 2 minutes | 653.262 | 1 |
| Example 4-3) Placing in cone-shaped mold preheated for 6 minutes and baking for 2 minutes | 688.929 | 1 |
| Example 4-4) Placing in cone-shaped mold preheated for 8 minutes and baking for 2 minutes | 470.438 | 1.5 |

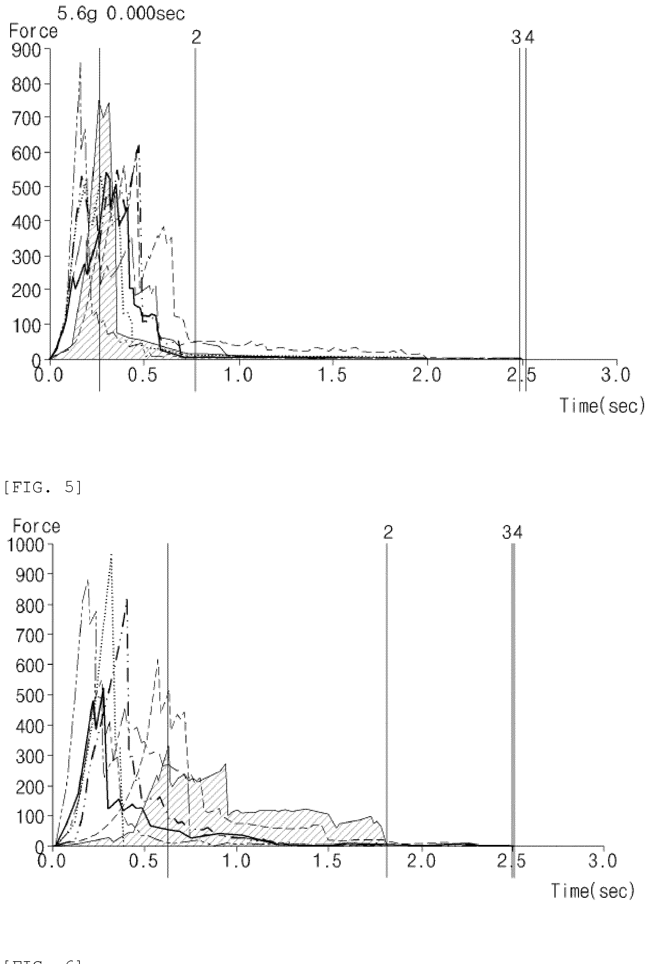

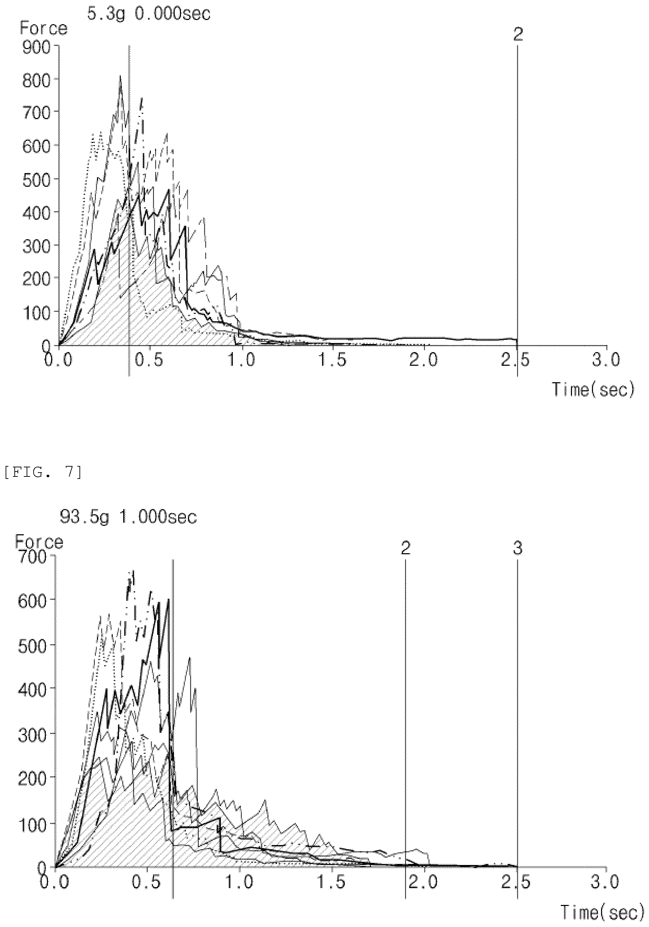

In the case of Example 4-1 (FIG. 4) where the sample was baked for 5 minutes without preheating in Experimental Example 4 above, a strong chewing sensation appeared during a very short period of time of 0.5 seconds, and gave a somewhat hard texture when eating, and thus the sample was not suitable. In the case of Example 4-2 (FIG. 5), where the sample was placed in a cone-shaped mold preheated for 4 minutes and baked for 2 minutes, peaks appeared at long intervals for a longer time, thus providing the sample with a crispy chewy texture, and thus provided a good texture. Additionally, in the case of Example 4-3 (FIG. 6), where the sample was placed in a cone-shaped mold preheated for 6 minutes and baked for 2 minutes, the sample also showed a crispy chewy texture and peaks were generated at long intervals of 1 second, thus also providing a good texture. Meanwhile, in the case of Example 4-4 (FIG. 7) where the sample was placed in a cone-shaped mold preheated for 8 minutes and baked for 2 minutes, stickiness occurred due to dextinization of the starch included in the rice paper causing the sample to be attached to teeth while eating, thus showing a foreign body sensation. In addition, the hardness of the sample was weakened and there is a risk of being broken during handling and/or distribution, thus not being suitable.

## Claims

1. An edible sheet, comprising:
a bonded sheet, which comprises at least one grain sheet comprising grains and at least one seaweed sheet comprising seaweed; and
a moisture barrier layer comprising a moisture barrier material, which is formed on at least a portion of at least one surface selected from one surface of a bonding portion where the grain sheet and the seaweed sheet are bonded so as to form the bonded sheet, and one side of the bonded sheet.

2. The edible sheet of claim 1, wherein the grain comprises at least one selected from the group consisting of rice, barley, soybean, foxtail millet, millet, sorghum, wheat, and corn.

3. The edible sheet of claim 1, wherein the seaweed comprises at least one selected from the group consisting of chlorella, green laver, green sea fingers, *Capsosiphon fulvescens,* laver, agar-agar, sea mustard, kelp, *Sargassum,* and hijiki.

4. The edible sheet of claim 1, wherein the grain sheet and the seaweed sheet of the bonded sheet are bonded with a bonding solution comprising water.

5. The edible sheet of claim 1, wherein the moisture barrier layer comprises at least one selected from the group consisting of edible oil and fat, shellac, lecithin, carnauba wax, and gelatin.

6. The edible sheet of claim 5, wherein the edible oil and fat comprises at least one selected from the group consisting of hydrogenated palm oil, hydrogenated palm kernel oil, shortening, hydrogenated soybean oil, palm oil, partially hydrogenated soybean oil, palm olein oil, canola oil, olive oil, grape seed oil, brown rice oil, corn oil, soybean oil, and oil and fat powders thereof.

7. The edible sheet of claim 5, wherein the edible oil and fat is in a solid or semi-solid state at room temperature.

8. The edible sheet of claim 1, wherein the edible sheet is a frozen edible sheet.

9. The edible sheet of claim 1, wherein the edible sheet has a hardness of 200 g to 1,200 g.

10. The edible sheet of claim 1, wherein the edible sheet has a moisture content of 0.5 wt% or higher and less than 3.0 wt% per 1 g of the edible sheet 60 days immediately after freezing.

11. A method for preparing an edible sheet, comprising:
forming a bonded sheet by bonding at least one grain sheet comprising grains and at least one seaweed sheet comprising seaweed; and
forming a moisture barrier layer comprising a moisture barrier material on at least a portion of at least one surface selected from one surface of a bonding portion where the grain sheet and the seaweed sheet are bonded so as to form the bonded sheet, and one side of the bonded sheet.

12. A method for preparing an edible sheet, comprising:
preparing a bonded sheet, in which at least one grain sheet comprising grains and at least one seaweed sheet comprising seaweed are bonded; and
forming a moisture barrier layer on at least a portion of one side of the bonded sheet.

13. The method of claim 11 or 12, further comprising a step of baking the bonded sheet.

14. The method of claim 11 or 12, further comprising molding the bonded sheet into a predetermined shape.

15. The method of claim 11 or 12, wherein the bonding step is to bond the grain sheet and the seaweed sheet using a bonding solution comprising water.

16. The method of claim 11 or 12, wherein the moisture barrier layer comprises at least one selected from the group consisting of edible oil and fat, shellac, lecithin, carnauba wax, and gelatin.

17. The method of claim 16, wherein the edible oil and fat comprises at least one selected from the group consisting of hydrogenated palm oil, hydrogenated palm kernel oil, shortening, hydrogenated soybean oil, palm oil, partially hydrogenated soybean oil, palm olein oil, canola oil, olive oil, grape seed oil, brown rice oil, corn oil, soybean oil, and oil and fat powders thereof.
